# EUROPÄISCHE PATENTSCHRIFT

(11) **EP 2 999 893 B1**
(45) Veröffentlichungstag und Bekanntmachung des Hinweises auf die Patenterteilung: **17.01.2018**
(21) Anmeldenummer: 14722532.0
(22) Anmeldetag: 17.03.2014
(51) Int. Cl.: F16C 33/41, F16C 33/66

(54) **WÄLZKÖRPERLAGER MIT KÄFIG**
ROLLING ELEMENT BEARING WITH CAGE
PALIER DE CORPS DE ROULEMENT AVEC CAGE

(30) Priorität: 21.05.2013 DE 102013209288
(43) Veröffentlichungstag der Anmeldung: 30.03.2016
(73) Patentinhaber: Schaeffler Technologies AG & Co. KG, 91074 Herzogenaurach (DE)
(72) Erfinder: BATALHA, Tiago, 13309-045 Itu (BR); CURY, Rudoniel, 18103-518 Sorocaba (BR)
(86) Internationale Anmeldenummer: PCT/DE2014/200125
(87) Internationale Veröffentlichungsnummer: WO 2014/187456

(56) Entgegenhaltungen:
- DE-A1- 10 353 098
- DE-A1-102008 059 571
- JP-A- H08 177 865
- JP-A- H09 196 067
- JP-A- 2002 098 150
- JP-A- 2006 112 595
- JP-A- 2011 052 814
- US-B2- 6 890 105

## Beschreibung

### Gebiet der Erfindung

Die Erfindung betrifft ein Wälzkörperlager mit den Merkmalen des Oberbegriffs des Anspruchs 1.

### Hintergrund der Erfindung

Kugellager als Ausführungsformen eines Wälzkörperlagers weisen in vielen Bauarten einen inneren und einen äußeren Ring auf, zwischen denen Kugeln als Wälzkörper abwälzend angeordnet sind. Durch die Relativverdrehung von dem inneren und dem äußeren Ring laufen die Kugeln über Laufbahnen der Ringe und erlauben somit eine Relativverdrehung der an den Ringen angeschlossenen Konstruktionen.

Um Reibungsverluste gering zu halten und zugleich die Lebensdauer der Kugellager zu erhöhen, werden diese in der Regel mit einem Schmiermittel geschmiert. Eine mögliche Variante der Schmierung ist dabei die Lebensdauerschmierung, wobei das Wälzkörperlager mit einem Schmiermittelreservoir versehen wird, welches im Volumen so bemessen ist, dass dieses für die Lebensdauer des Wälzkörperlagers ausreichend ist. Eine sich daraus ergebende Herausforderung ist es, zu verhindern, dass sich das Schmiermittel in Regionen innerhalb des Wälzkörperlagers ablagert, die für die Schmierung nutzlos sind und dadurch andere Regionen, die eine Schmierung benötigen, unterversorgt sind. Vor diesem Hintergrund werden Käfige in Kugellagern, welche die Wälzkörper führen, so ausgestattet, dass diese den Schmiermittelfluss unterstützen. Die Druckschrift DE10 2008 059 571 A1, die wohl den nächstkommenden Stand der Technik bildet, betrifft ein Wälzlager mit einem inneren Ring, einem äußeren Ring, Wälzkörpern, die zwischen den Ringen angeordnet sind, und eine Käfigeinrichtung mit Fenstern, in denen die Wälzkörper angeordnet sind und die die Wälzkörper zumindest abschnittsweise mit einer umsäumenden Umgriffswandung halten. In der Druckschrift wird vorgeschlagen, dass jene Umgriffswandung in einem die Kugelzentrumsbahn durchsetzenden Bereich ein von einem linken Schmierstoffdurchlaufkanal und einem rechten Schmierstoffdurchlaufkanal begrenztes Stützplateau bildet. Durch die Schmierstoffdurchlaufkanäle wird erreicht, dass eine vorteilhafte Schmierstoffverteilung auf den tragenden Umfangsbereichen der Wälzkörper sichergestellt wird. US 6 890 105 B2 offenbart die Merkmale des Oberbegriffs von Anspruch 1.

### Aufgabe der Erfindung

Der Erfindung liegt die Aufgabe zugrunde, ein Kugellager vorzuschlagen, welches eine verbesserte Schmierstoffversorgung umsetzt.

### Beschreibung der Erfindung

Erfindungsgemäß wird diese Aufgabe durch ein Kugellager mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Der Gegenstand der Erfindung ist ein Kugellager, welches besonders bevorzugt als ein Radiallager ausgebildet ist. Das Wälzkörperlager umfasst eine Mehrzahl von Kugeln als Wälzkörper, welche besonders bevorzugt einreihig in dem Wälzkörperlager angeordnet sind. Die Kugeln sind vorzugsweise aus Metall gefertigt, alternativ kann anderes Material, wie zum Beispiel Keramik, zum Einsatz kommen.

Das Wälzkörperlager weist insbesondere einen Innenlaufbahnabschnitt und einen Außenlaufbahnabschnitt auf, auf denen die Kugeln als Wälzkörper abwälzen. Insbesondere weist das Wälzkörperlager einen Innenring und einen Außenring auf, welche die jeweiligen Laufbahnen tragen.

Ferner umfasst das Wälzkörperlager einen Käfig zur Führung und/oder Beabstandung der Kugeln in Umlaufrichtung. Der Käfig ist besonders bevorzugt aus Kunststoff ausgebildet, da Kunststoff besonders große Gestaltungsspielräume hinsichtlich der Form des Käfigs erlaubt. Der Käfig umfasst einen Seitenringabschnitt, welcher umlaufend ausgebildet ist und eine Mehrzahl von Stegabschnitten, welche auf dem Seitenringabschnitt angeordnet sind. Insbesondere sind Stegabschnitte und Seitenringabschnitte einstückig ausgebildet und beispielsweise als ein gemeinsames Spritzgussteil realisiert. Der Seitenringabschnitt gemeinsam mit den Stegabschnitten bildet in Umlaufrichtung vorzugsweise äquidistant angeordnete Schnapptaschen, wobei in den Schnapptaschen jeweils eine der Kugeln angeordnet ist. Die Kugeln sind in den Schnapptaschen über einen Formschluss verliersicher, insbesondere selbsthaltend gehalten. Die Kugeln werden bei der Montage in die Schnapptaschen eingeschnappt und durch eine Umgriffswandung in den Schnapptaschen formschlüssig gehalten. Zum Zwecke der Beschreibung wird definiert, dass der Käfig eine Lagerachse des Wälzkörperlagers definiert.

In der Schnapptasche, insbesondere in einigen Schnapptaschen, im Speziellen in allen Schnapptaschen, ist in einem Bereich zwischen dem Seitenringabschnitt und der Kugelzentrumsbahn der Kugeln zwischen der Kugel und dem angrenzenden Stegabschnitt und/oder dem angrenzenden Seitenringabschnitt ein Schmierstoffkanal gebildet. Die Kugelzentrumsbahn ist ein gedachter zu der Lagerachse konzentrischer Kreis ausgebildet, welcher durch den Mittelpunkt der Kugeln verläuft. Insbesondere ist der Schmierstoffkanal in einem Eckbereich der Schnapptasche angeordnet. Besonders bevorzugt weist die Schnapptasche, insbesondere einige Schnapptaschen, im Speziellen alle Schnapptaschen, in beiden, dem Seitenringabschnitt zugewandten Eckbereichen einen Schmierstoffkanal auf. Der Schmierstoffkanal ist so gestaltet, dass dieser die radiale Außenseite in Bezug auf die Lagerachse und die radiale Innenseite in Bezug auf die Lagerachse des Käfigs strömungstechnisch verbindet. Insbesondere verläuft der Schmierstoffkanal in radialer Richtung zu der Lagerachse. Als Schmierstoff kommt bevorzugt ein Schmierfett oder ein Schmieröl zum Einsatz.

Vorzugsweise ist der Wälzkörperraum des Wälzkörperlagers z. B. durch Dichtungen zur Umgebung abgedichtet, so dass kein Schmierstoff entweichen kann. Insbesondere ist das Wälzkörperlager lebensdauergeschmiert.

Im Rahmen der Erfindung wird vorgeschlagen, dass an den Stegabschnitten auf der radialen Außenseite ein Außenblockabschnitt und/oder auf der radialen Innenseite ein Innenblockabschnitt angeformt ist. Die Stegabschnitte sind somit in radialer Richtung verstärkt oder "gedoppelt". Der Außenblockabschnitt steht gegenüber dem Seitenringabschnitt in Bezug auf die Lagerachse in radialer Richtung nach außen über. Ergänzend steht der Innenblockabschnitt gegenüber dem Seitenringabschnitt in Bezug auf die Lagerachse in radialer Richtung nach innen über. Auf diese Weise wird der verfügbare Wälzkörperraum zwischen zwei angrenzenden Kugeln verringert. Der Wälzkörperraum ist das Volumen, welches die Wälzkörper während ihrer Rotation zwischen dem Außenringabschnitt und dem Innenringabschnitt in Anspruch nehmen.

Der Vorteil des Außenblockabschnitts und/oder des Innenblockabschnitts ist es, dass der Wälzkörperraum zwischen den Kugeln verringert wird, sodass in diesen Regionen keine Ablagerung oder Sammlung von Schmierstoff erfolgen kann, welcher dann während der weiteren Lebenszeit des Wälzkörperlagers ungenutzt deponiert ist. Zugleich wird jedoch durch den Außenblockabschnitt und/oder den Innenblockabschnitt der Transport von Schmierstoff in Umlaufrichtung zwischen den Schnapptaschen behindert, da die Blockabschnitte zugleich eine Barriere darstellen. Aus diesem Grund ist vorgesehen, dass der Außenblockabschnitt und/oder der Innenblockabschnitt gegenüber dem Seitenringabschnitt in radialer Richtung überstehen. Dadurch wird erreicht, dass Schmierstoff ausgehend von dem Außenblockabschnitt und/oder Innenblockabschnitt oder von den Schnapptaschen in Richtung des Seitenringabschnitts abfließen kann und an dem Außenblockabschnitt beziehungsweise Innenblockabschnitt vorbei zu der nächsten Schnapptasche gelangen kann. Dadurch wird sichergestellt, dass im Betrieb des Wälzkörperlagers der Schmierstoff in Umlaufrichtung gleichmäßig verteilt wird. Zugleich wird zumindest durch den Außenblockabschnitt der Schmierstoff gestaut und dadurch der Schmierstoffkanal mit Schmierstoff versorgt, sodass ein Transport in radialer Richtung von der radialen Außenseite zu der radialen Innenseite des Käfigs erreicht wird.

In einer möglichen konstruktiven Ausgestaltung der Erfindung weist der Käfig randseitig einen umlaufenden freien Ringbereich auf, welcher in axialer Richtung durch die Außenblockabschnitte oder durch die Innenblockabschnitte und in radialer Richtung durch den Seitenabschnitt begrenzt ist. Der umlaufende freie Ringbereich ist insbesondere als ein Kantenbereich ausgebildet, der den Transport des Schmierstoffs in Umlaufrichtung sicherstellt.

In einer konstruktives Ausgestaltung der Erfindung weist der Außenblockabschnitt eine in axialer Richtung verlaufende und der angrenzenden Schnapptasche zugewandte Kante auf, an die sich eine der angrenzenden Schnapptasche zugewandte Staufläche für den Schmierstoff anschließt. Die Staufläche erstreckt sich in einer gedachten Ebene, in der auch die Lagerachse angeordnet ist. Zwischen der Staufläche und der Kugel in der angrenzenden Schnapptasche ist ein Schmierstoffsammelraum gebildet, der strömungstechnisch mit dem Schmierstoffkanal verbunden ist. Im Betrieb wird durch die Staufläche Schmierstoff in dem Schmierstoffsammelraum gesammelt, wobei der Schmierstoff aus dem Schmierstoffsammelraum weiter verteilt und somit aktiv genutzt werden kann.

Bei einer besonders bevorzugten Ausführungsform der Erfindung ist die genannte Kante gerade oder geradlinig und/oder die Staufläche eben ausgebildet. In dieser Ausgestaltung kann besonders einfach Schmierstoff in dem Schmierstoffsammelraum gefangen werden.

Bei einer weiteren Ausgestaltung der Erfindung ist der Schmierstoffsammelraum in axialer Richtung durch den Seitenringabschnitt, in Umlaufrichtung durch die Staufläche und in radialer Richtung durch einen Bodenabschnitt begrenzt. Der Bodenabschnitt ist in radialer Richtung gegenüber einer radialen Oberseite des Seitenringabschnitts nach innen versetzt. Der Seitenringabschnitt ist gegenüber der Oberseite des Außenblockabschnitts radial nach innen versetzt. Dieser gestufte Aufbau hat den Vorteil, dass ein Abfluss des Schmierstoffs aus dem Schmierstoffsammelraum zum einen über den Seitenringabschnitt und nachfolgend über den umlaufenden freien Ringbereich in Umlaufrichtung und zugleich oder alternativ über den Schmierstoffkanal ermöglicht ist. Betrachtet man den Käfig in einer Draufsicht in radialer Richtung zu der Lagerachse, so weist der Bodenabschnitt eine eckige Grundfläche auf, wobei eine Seitenkante durch den Seitenringabschnitt und die zweite Seitenkante durch die Staufläche gebildet ist.

Bei einer bevorzugten Weiterbildung der Erfindung ist die freie Begrenzungskante des Bodenabschnitts, welche der in der Schnapptasche angeordneten Kugel zugewandt ist, in ihrem Verlauf in einem Mittelabschnitt mit einem Radius konzentrisch zu der Kugel ausgebildet. Durch den Mittelabschnitt wird die Kugel im Betrieb geführt, wobei der Mittelabschnitt zugleich einen Teil der formschlüssigen Halterung bildet. Im Randbereich in Richtung des Seitenringabschnitts ist die Begrenzungskante weiter ausgebildet, wobei sich durch die Differenz zwischen dem Radius und der weiteren Ausbildung eine Eingangsöffnung für den Schmierstoffkanal ergibt.

Bei einer bevorzugten konstruktiven Ausgestaltung der Erfindung weist die freie Unterseite des Innenblockabschnitts eine konkave Ausformung mit vier nach außen geöffneten Trichtersegmenten auf. Insbesondere sind die Trichtersegmente in Unteransicht auf die freie Unterseite dreiecksförmig ausgebildet. Zwei der Trichtersegmente sind gegensinnig zueinander in Umlaufrichtung orientiert, die anderen zwei Trichtersegmente sind gegensinnig zueinander in axialer Richtung orientiert. Durch die konkave Ausformung wird ein zusätzliches Schmierstoffreservoir gebildet, wobei durch die Trichtersegmente erreicht wird, dass Schmierstoff, welcher in die Ausformung gelangt, über die Trichtersegmente wieder ausgegeben wird. Die Ausgabe des Schmierstoffs erfolgt somit durch die ersten zwei Trichtersegmente zu den angrenzenden Schnapptaschen und durch die anderen zwei Trichtersegmente in axialer Richtung, und zwar zum einen in Richtung des Seitenringabschnitts, wo dieser Teil des Schmierstoffes über den freien Ringbereich in Umlaufrichtung weiter verteilt werden kann, und zum anderen in die andere axiale Richtung. Auf diese Weise wird auch der Schmierstoff auf der Unterseite des Käfigs aktiv weiter verteilt.

Bei einer möglichen Weiterbildung der Erfindung ist in dem Seitenringabschnitt für jede Schnapptasche eine in axialer Richtung verlaufende Schmierstofföffnung angeordnet. Die Schmierstofföffnung erlaubt ein Eindringen von Schmierstoff aus der axialen Richtung in die Schnapptasche und verbessert auf diese Weise den Schmierstofffluss. Insbesondere ist die Tiefenerstreckung der Schmier-stofföffnung in radialer Richtung zu der Kugel ausgerichtet, im Speziellen ist der Eingang der Schmierstofföffnung koaxial zu der Kugel in den Schnapptaschen angeordnet. Auf diese Weise kann die Schmierstofföffnung zum einen die Kugeln in axialer Richtung führen und zugleich mit Schmierstoff versorgen.

In einer bevorzugten konstruktiven Ausgestaltung ist der Käfig als ein Kammkäfig ausgebildet, wobei im Betrieb die dem Seitenringabschnitt abgewandte axiale Seite geöffneten Stegabschnitte aufweist. Diese Ausgestaltung unterstreicht nochmals die vorteilhafte Wirkung der Erfindung, wobei auf der offenen axialen Seite des Kammkäfigs der Schmierstoff sich ohnehin ungehindert verteilen kann und auf der Seite des Seitenringabschnitts die Verteilung in Umlaufrichtung durch den Versatz des Außenblockabschnitts beziehungsweise des Innenblockabschnitts erreicht wird.

Bei einer bevorzugten konstruktiven Realisierung der Erfindung ist jeder Stegabschnitt gemeinsam mit dem angeformten Außenblockabschnitt und dem angeformten Innenblockabschnitt als ein Massivblock ausgebildet, welcher sich in radialer Richtung über mindestens 25 %, vorzugsweise über mindestens 50 %, im Speziellen über mindestens 75 % des Durchmessers der Kugel im Wälzkörperlager erstreckt.

### Kurze Beschreibung der Zeichnungen

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: eine schematische Draufsicht auf ein Wälzkörperlager als ein Ausführungsbeispiel der Erfindung;
- Figur 2: den Käfig des Wälzkörperlagers in Figur 1 in einer schematischen dreidimensionalen Darstellung;
- Figur 3: ein Detail aus dem Käfig in der Figur 2.

### Ausführliche Beschreibung der Zeichnungen

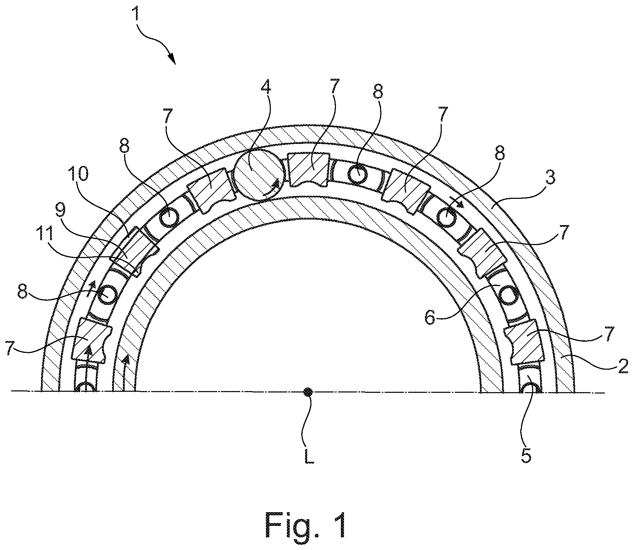

Die Figur 1 zeigt ein Wälzkörperlager 1 als ein Ausführungsbeispiel der Erfindung in einer schematischen axialen Draufsicht, wobei nur ein halbes Wälzlager 1 dargestellt ist. Das Wälzkörperlager 1 umfasst einen Innenring 2 und einen Außenring 3, wobei zwischen Innenring 2 und Außenring 3 eine Mehrzahl von Kugeln 4 als Wälzkörper angeordnet sind, sodass diese bei einer Relativverdrehung von Innenring 2 und Außenring 3 um eine Lagerachse L abwälzend auf Laufbahnen der Ringe 2, 3 abrollen.

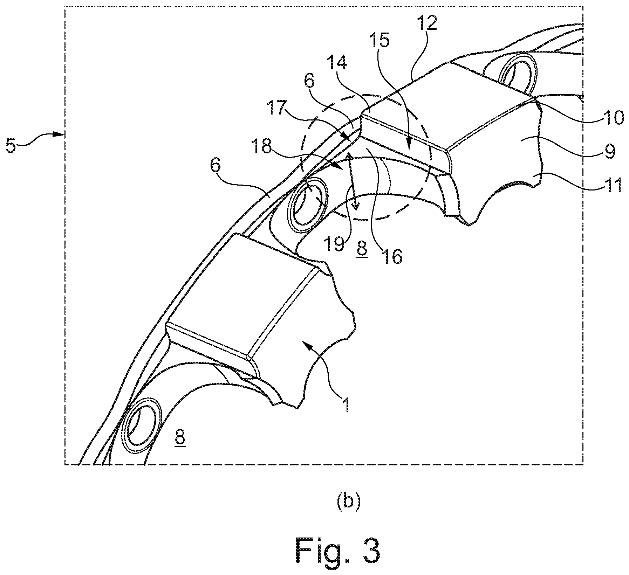

Das Wälzkörperlager 1 umfasst einen Käfig 5, welcher aus Kunststoff gefertigt ist. Der Käfig 5 umfasst einen Seitenringabschnitt 6, welcher als eine in einer Radialebene senkrecht zu der Lagerachse L ersteckende Ringscheibe ausgebildet ist, sowie eine Mehrzahl von Stegabschnitten 7, welche sich in axialer Richtung erstrecken und an dem Seitenringabschnitt 6 angeformt sind. Durch die Stegabschnitte 7 ergeben sich in Umlaufrichtung gleichmäßig verteilte Schnapptaschen 8, wobei jede Schnapptasche 8 in Umlaufrichtung durch einen der Stegabschnitte 7 und in axialer Richtung durch den Seitenringabschnitt 6 begrenzt ist. Die Schnapptaschen 8 sind so ausgeführt, dass die Kugeln 4 in den Schnapptaschen 8 formschlüssig gegen ein Herausfallen in axialer oder radialer Richtung gesichert sind. Hierzu weist jede der Schnapptaschen 8 eine Umgriffswandung auf, sodass ein Herauswandern in radialer Richtung verhindert ist. Aus der Figur 3 ergibt sich beispielsweise, dass auch in axialer Richtung die Umgriffswandung derart konvex ausgeführt ist, dass die Kugel 4 klammerartig umgriffen ist und auch nicht in axialer Richtung herauswandern kann. Insbesondere sind die Kugeln 4 in dem Käfig 5 selbsthaltend angeordnet, im speziellen eingeschnappt. Der Käfig 5 ist somit als ein Schnappkäfig realisiert.

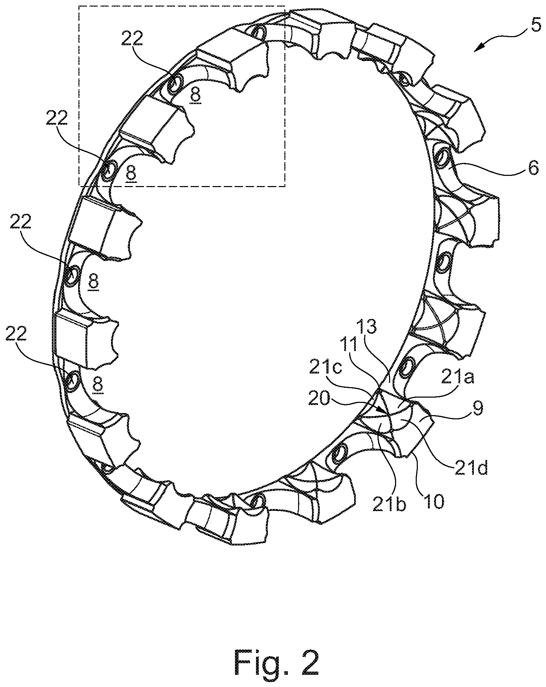

Bei einer Zusammenschau der Figuren 1, 2 und 3 ergibt sich, dass die Stegabschnitte 7 gedanklich jeweils in einen Mittelabschnitt 9, einen radial außenseitig aufgesetzten Außenblockabschnitt 10 und einen radial innenseitig aufgesetzten Innenblockabschnitt 11 zerlegt werden können. Der Mittelabschnitt 9 erstreckt sich im axialen Deckungsbereich zu dem Seitenringabschnitt 6. Wie sich insbesondere aus der Figur 3 ergibt, ist der Außenblockabschnitt 10 gegenüber dem Seitenringabschnitt 6 in radialer Richtung versetzt angeordnet, sodass sich randseitig ein umlaufender freier Randbereich oder Kantenbereich 12 ergibt. Die Oberseite des Außenblockabschnitts 10 ist als eine gleichmäßige Fläche ausgeführt, welche wahlweise eben oder parallel zu der hohlzylindrischen Innenfläche des Außenrings 3 ausgebildet sein kann. Auch Zwischenformen hierzu sind möglich. Wie sich wohl aus der Figur 2 am besten ergibt, steht auch der Innenblockabschnitt 11 in radialer Richtung über den Seitenringabschnitt 6 über, sodass sich auch auf der radialen Innenseite des Käfigs 5 ein umlaufender freier Ringbereich 13 ergibt.

Der Außenblockabschnitt 10 ist auf der der Schnapptasche 8 zugewandten Seite an der Oberseite durch eine gerade Kante 14, welche in axialer Richtung und/oder parallel zur Lagerachse L ausgerichtet ist, begrenzt und geht dort rechtwinklig oder in etwa rechtwinklig in eine Staufläche 15 über, welche sich in radialer Richtung erstreckt.

Die Staufläche 15 endet, indem diese auf einen Bodenabschnitt 16 auftrifft, dessen Flächenerstreckung senkrecht oder in etwa senkrecht zu einem Radialvektor zu der Lagerachse L ist. Auf der axialen Seite wird der Bodenabschnitt 16 durch den Seitenringabschnitt 6 begrenzt, sodass sich in radialer Draufsicht betrachtet ein in etwa dreieckiger Schmierstoffsammelraum 17 ergibt. Die freie Begrenzungskante 18 des Bodenabschnitts 16 ist im Bereich der Kugelzentrumsbahn der Kugeln 4 mit einem Radius konzentrisch zu der Kugel 4 ausgebildet, sodass die Kugel 4 geführt und gehalten werden kann. Im Randbereich in Richtung des Seitenringabschnitts 6 tritt die Begrenzungskante 18 dagegen gegenüber dem Radius zurück, sodass sich zwischen Kugel 4 und dem Übergangsbereich zwischen Seitenringabschnitt 6 und Stegabschnitt 7 ein radial verlaufender Schmierstoffkanal 19 bildet.

Im Betrieb des Wälzkörperlagers 1 wird Schmierstoff in den Schmierstoffsammelraum 17 eingebracht, welcher wahlweise durch den Schmierstoffkanal 19 von einer radialen Außenseite des Käfigs 5 zu einer radialen Innenseite des Käfigs 5 transportiert wird oder über den Seitenringabschnitt 6 übertritt und über den Ringbereich 13 an dem Außenblockabschnitt 10 vorbei und zur nächsten Schnapptasche 8 geführt wird.

Eine Überlegung der Ausgestaltung ist es, den Wälzkörperraum zwischen den Kugeln 4 im Bereich der Stegabschnitte 7 zu verkleinern, um eine unnötige Ablagerung von Schmierstoff in diesen Bereichen zu vermeiden. Zudem soll die Schmierstoffversorgung verbessert werden. Dies wird erreicht, indem über die Staufläche 15 der Schmierstoff in dem Schmierstoffsammelraum 17 gesammelt wird und zum einen über den Schmierstoffkanal 19 und zum anderen über den Ringbereich 13 weiter transportiert wird.

Zur weiteren Unterstützung der verbesserten Schmierstoffversorgung des Wälzkörperlagers 1 sind an der Unterseite der Innenblockabschnitte 11 konkave Ausformungen 20 angebracht, die sich in vier Trichterabschnitte 21a, b, c, d aufteilen. Die Trichterabschnitte 21a, b, c, d sind in radialer Draufsicht von innen dreiecksförmig ausgeführt, wobei sich deren Spitzen in der Mitte des Innenblockabschnitts 11 treffen. Zwei der vier Trichterabschnitte 21a, b sind in Richtung der Schnapptaschen 8 orientiert, die anderen zwei Trichterabschnitte 21c, d sind in axialer Richtung orientiert. Durch die konkave Ausformung 20 kann Schmierstoff auf der Unterseite der Stegabschnitte 7 gefangen werden und kontrolliert zum einen in Richtung der Schnapptaschen 8 und zum anderen auf in Richtung des Seitenringabschnitts 6 verteilt werden, wobei über den Ringbereich 13 der Schmierstoff an weitere Schnapptaschen 8 in Umlaufrichtung weitergegeben werden kann.

Ferner weist der Käfig 5 axial verlaufende Schmierstofföffnungen 22 auf, welche als kreisrunde Durchgangslöcher in den Seitenringabschnitten 6 ausgebildet sind. Die zentrale Achse der Schmierstofföffnungen 22 durchdringt dabei den Mittelpunkt der in der jeweiligen Schnapptasche 8 angeordneten Kugel 4, sodass die Kugel 4 zugleich durch die Eingangsöffnung der Schmierstofföffnung 22 geführt wird.

### Bezugszeichenliste

- 1: Wälzkörperlager
- 2: Innenring
- 3: Außenring
- 4: Kugeln
- 5: Käfig
- 6: Seitenringabschnitt
- 7: Stegabschnitte
- 8: Schnapptaschen
- 9: Mittelabschnitt
- 10: Außenblockabschnitt
- 11: Innenblockabschnitt
- 12: Kantenbereich
- 13: Ringbereich
- 14: Kante
- 15: Staufläche
- 16: Bodenabschnitt
- 17: Schmierstoffsammelraum
- 18: Begrenzungskante
- 19: Schmierstoffkanal
- 20: konkave Ausformungen
- 21a, b, c, d: Trichterabschnitte
- 22: Schmierstofföffnungen
- L: Lagerachse

## Patentansprüche

1. Kugellager (1) mit einer Mehrzahl von Lagerkugeln (4), die in einem Käfig (5) geführt werden, der eine Lagerachse (L) definiert und einen Seitenring (6) sowie eine Mehrzahl auf dem Seitenring (6) angeordneter Stegabschnitte (7) aufweist, welche Schnapptaschen (8) bilden, in denen jeweils eine der Lagerkugeln (4) angeordnet und über einen Formschluss verliersicher gehalten ist, wobei in jeder Schnapptasche (8) in einem Bereich zwischen dem Seitenring (6) und der Kugelzentrumsbahn der Kugeln (4) zwischen der Kugel (4) und dem angrenzenden Stegabschnitt (7) ein Schmierstoffkanal (19) gebildet ist, der die radiale Außenseite und die radiale Innenseite des Käfigs (5) strömungstechnisch verbindet, wobei an den Stegabschnitten (7) auf der radialen Außenseite ein Außenblockabschnitt (10) angeformt ist, welcher gegenüber dem Seitenring (6) in Bezug auf die Lagerachse (L) in radialer Richtung übersteht und eine in axialer Richtung verlaufende und der angrenzenden Schnapptasche (8) zugewandte Kante (14) bildet, an die sich eine der angrenzenden Schnapptasche (8) zugewandte Staufläche (15) für Schmierstoff anschließt, **dadurch gekennzeichnet, dass** zwischen der Staufläche (15) und der Kugel (4) ein Schmierstoffsammelraum (17) gebildet ist, der strömungstechnisch mit dem Schmierstoffkanal (19) verbunden ist und in axialer Richtung durch den Seitenring (6), in Umlaufrichtung durch die Staufläche (15) und in radialer Richtung durch einen Bodenabschnitt (16) begrenzt ist, wobei der Bodenabschnitt (16) in radialer Richtung gegenüber der Oberseite des Seitenrings (6) nach innen versetzt ist, so dass ein Abfluss des Schmierstoffs über den Seitenring (6) und zugleich über den Schmierstoffkanal (19) möglich ist, wobei der Außenblockabschnitt (10) den verfügbaren Wälzkörperraum zwischen zwei angrenzenden Kugeln verringert.

2. Kugellager (1) nach Anspruch 1, **dadurch gekennzeichnet, dass** zusätzlich zu dem auf der radialen Außenseite den Stegabschnitten (7) angeformten Außenblockabschnitt (10) auch auf der radialen Innenseite der Stegabschnitte ein Innenblockabschnitt (11) angeformt ist, welcher gegenüber dem Seitenring (6) in Bezug auf die Lagerachse (L) in radialer Richtung übersteht und den verfügbaren Wälzkörperraum zwischen zwei angrenzenden Kugeln verringert.

3. Kugellager (1) nach Anspruch 2, **dadurch gekennzeichnet, dass** der Käfig (5) randseitig einen umlaufenden freien Ringbereich (12, 13) aufweist, welcher in axialer Richtung durch die Außenblockabschnitte (10) oder durch die Innenblockabschnitte (11) und in radialer Richtung durch den Seitenring (6) begrenzt ist.

4. Kugellager (1) nach Anspruch 3, **dadurch gekennzeichnet, dass** die Kante (14) des Außenblockabschnittes (10) geradlinig und/oder die angrenzende Staufläche (15) eben ausgebildet ist.

5. Kugellager (1) nach Anspruch 1, **dadurch gekennzeichnet, dass** eine freie Begrenzungskante (18) des Bodenabschnitts (16) im Verlauf in einem Mittelabschnitt mit einem Radius konzentrisch zu der Kugel (4) und im Randbereich weiter als im Mittelabschnitt ausgebildet ist, so dass eine Eingangsöffnung für den Schmierstoffkanal (19) gebildet ist.

6. Kugellager (1) nach einem der vorhergehenden Ansprüche, **dadurch gekennzeichnet, dass** die freie Unterseite des Innenblockabschnitts (11) eine konkave Ausformung (20) mit vier Trichtersegmenten (21 a, b, c, d) aufweist, wobei zwei Trichtersegmente (21 a, b) gegensinnig zueinander in Umlaufrichtung und zwei Trichtersegmente (21, c, d) gegensinnig zueinander in axialer Richtung orientiert sind.

7. Kugellager (1) nach einem der vorhergehenden Ansprüche, **dadurch gekennzeichnet, dass** in dem Seitenring (6) für jede Schnapptasche (8) eine in axialer Richtung verlaufende Schmierstofföffnung (22) angeordnet ist, welche in radialer Richtung zu dem Mittelpunkt der angrenzenden Kugel (4) ausgerichtet ist.

8. Kugellager (1) nach einem der vorhergehenden Ansprüche, **dadurch gekennzeichnet, dass** der Käfig (5) als ein Kammkäfig ausgebildet ist.

9. Kugellager (1) nach Anspruch 8, **dadurch gekennzeichnet, dass** jeder der Stegabschnitte (7) gemeinsam mit dem angeformten Außenblockabschnitt (10) und dem angeformten Innenblockabschnitt (11) jeweils einen Massivblock bilden, welcher sich in radialer Richtung über eine Breite von mindestens 25 %, vorzugsweise von mindestens 50 %, im Speziellen von mindestens 75 % des Durchmessers der Kugel (4) erstreckt.

## Claims

1. Ball bearing (1) having a plurality of bearing balls (4) which are guided in a cage (5) which defines a bearing axis (L) and has a side ring (6) and a plurality of web sections (7) which are arranged on the side ring (6) and form snap-action pockets (8), in which in each case one of the bearing balls (4) is arranged and is held captively via a positively locking connection, a lubricant duct (19) being formed in each snap-action pocket (8) in a region between the side ring (6) and the ball centre track of the balls (4) between the ball (4) and the adjoining web section (7), which lubricant duct (19) connects the radial outer side and the radial inner side of the cage (5) in flow terms, an outer block section (10) being integrally formed on the web sections (7) on the radial outer side, which outer block section (10) projects in the radial direction in relation to the bearing axis (L) with respect to the side ring (6) and forms an edge (14) which runs in the axial direction, faces the adjoining snap-action pocket (8), and is adjoined by an accumulating face (15) for lubricant, which accumulating face (15) faces the adjoining snap-action pocket (8), **characterized in that** a lubricant collecting space (17) is formed between the accumulating face (15) and the ball (4), which lubricant collecting space (17) is connected to the lubricant duct (19) in flow terms and is delimited in the axial direction by way of the side ring (6), in the circumferential direction by way of the accumulating face (15), and in the radial direction by way of a bottom section (16), the bottom section (16) being offset inwards in the radial direction with respect to the upper side of the side ring (6), with the result that an outflow of the lubricant is possible via the side ring (6) and at the same time via the lubricant duct (19), the outer block section (10) reducing the available rolling body space between two adjoining balls.

2. Ball bearing (1) according to Claim 1, **characterized in that,** in addition to the outer block section (10) which is integrally formed on the web sections (7) on the radial outer side, an inner block section (11) is also integrally formed on the radial inner side of the web sections, which inner block section (11) projects in the radial direction in relation to the bearing axis (L) with respect to the side ring (6) and reduces the available rolling body space between two adjoining balls.

3. Ball bearing (1) according to Claim 2, **characterized in that** the cage (5) has a circumferential free ring region (12, 13) on the edge side, which ring region (12, 13) is delimited in the axial direction by way of the outer block sections (10) or by way of the inner block sections (11) and in the radial direction by way of the side ring (6).

4. Ball bearing (1) according to Claim 3, **characterized in that** the edge (14) of the outer block section (10) is of rectilinear configuration and/or the adjoining accumulating face (15) is of planar configuration.

5. Ball bearing (1) according to Claim 1, **characterized in that** a free bounding edge (18) of the bottom section (16) is configured in the course in a centre section with a radius concentrically with respect to the ball (4), and is of wider configuration in the edge region than in the centre section, with the result that an inlet opening for the lubricant duct (19) is formed.

6. Ball bearing (1) according to one of the preceding claims, **characterized in that** the free underside of the inner block section (11) has a concave formation (20) with four funnel segments (21 a, b, c, d), two funnel segments (21 a, b) being oriented in opposite directions with respect to one another in the circumferential direction, and two funnel segments (21 c, d) being oriented in opposite directions with respect to one another in the axial direction.

7. Ball bearing (1) according to one of the preceding claims, **characterized in that** a lubricant opening (22) which runs in the axial direction is arranged in the side ring (6) for each snap-action pocket (8), which lubricant opening (22) is oriented in the radial direction with respect to the centre point of the adjoining ball (4).

8. Ball bearing (1) according to one of the preceding claims, **characterized in that** the cage (5) is configured as a comb-type cage.

9. Ball bearing (1) according to Claim 8, **characterized in that** each of the web sections (7) in each case forms a solid block together with the integrally formed outer block section (10) and the integrally formed inner block section (11), which solid block extends in the radial direction over a width of at least 25%, preferably of at least 50%, specifically of at least 75% of the diameter of the ball (4).

## Revendications

1. Roulement à billes (1) comprenant une pluralité de billes de roulement (4) qui sont guidées dans une cage (5) qui définit un axe de roulement (L) et qui présente une bague latérale (6) ainsi qu'une pluralité de portions de nervures (7) disposées sur la bague latérale (6), qui forment des cavités d'encliquetage (8) dans lesquelles à chaque fois l'une des billes de roulement (4) est disposée et est retenue de manière imperdable par le biais d'un engagement positif, un canal de lubrifiant (19) étant formé dans chaque cavité d'encliquetage (8) entre les billes (4) et la portion de nervure adjacente (7) dans une région entre la bague latérale (6) et la trajectoire centrale de billes des billes (4), lequel relie, par une technique fluidique, le côté extérieur radial et le côté intérieur radial de la cage (5), une portion de bloc extérieure (10) étant façonnée au niveau des portions de nervures (7) sur le côté extérieur radial, laquelle dépasse au-delà de la bague latérale (6) par rapport à l'axe de roulement (L) dans la direction radiale et forme une arête (14) s'étendant dans la direction axiale et tournée vers la cavité d'encliquetage adjacente (8), au niveau de laquelle arête se raccorde une surface de retenue (15) pour du lubrifiant, tournée vers la cavité d'encliquetage adjacente (8), **caractérisé en ce qu'**entre la surface de retenue (15) et la bille (4) est formé un espace d'accumulation de lubrifiant (17) qui est connecté par une technique fluidique au canal de lubrifiant (19) est qui est limité dans la direction axiale par la bague latérale (6), dans la direction périphérique par la surface de retenue (15) et dans la direction radiale par une portion de fond (16), la portion de fond (16) étant décalée vers l'intérieur dans la direction radiale par rapport au côté supérieur de la bague latérale (6), de telle sorte qu'un écoulement de lubrifiant par le biais de la bague latérale (6) et simultanément par le biais du canal de lubrifiant (19) soit possible, la portion de bloc extérieure (10) réduisant l'espace de corps de roulement disponible entre deux billes adjacentes.

2. Roulement à billes (1) selon la revendication 1, **caractérisé en ce qu'**en plus de la portion de bloc extérieure (10) façonnée sur le côté extérieur radial des portions de nervures (7), une portion de bloc intérieure (11) est également façonnée sur le côté intérieur radial des portions de nervures, laquelle fait saillie au-delà de la bague latérale (6) par rapport à l'axe de roulement (L) dans la direction radiale et réduit l'espace de corps de roulement disponible entre deux billes adjacentes.

3. Roulement à billes (1) selon la revendication 2, **caractérisé en ce que** la cage (5) présente du côté du bord une région de bague périphérique libre (12, 13) qui est limitée dans la direction axiale par les portions de bloc extérieures (10) ou par les portions de bloc intérieures (11), et dans la direction radiale par la bague latérale (6).

4. Roulement à billes (1) selon la revendication 3, **caractérisé en ce que** l'arête (14) de la portion de bloc extérieure (10) est réalisée sous forme rectiligne et/ou la surface de retenue adjacente (15) est réalisée sous forme plane.

5. Roulement à billes (1) selon la revendication 1, **caractérisé en ce qu'**une arête de limitation libre (18) de la portion de fond (16) est réalisée dans une portion centrale avec une allure ayant un rayon concentrique à la bille (4) et dans la région de bord, avec une allure plus large que dans la portion centrale, de telle sorte qu'une ouverture d'entrée soit formée pour le canal de lubrifiant (19).

6. Roulement à billes (1) selon l'une quelconque des revendications précédentes, **caractérisé en ce que** le côté inférieur libre de la portion de bloc intérieure (11) présente une formation concave (20) avec quatre segments en entonnoir (21 a, b, c, d), deux segments en entonnoir (21a, b) étant orientés en sens inverse l'un par rapport à l'autre dans la direction périphérique et deux segments en entonnoir (21, c, d) étant orientés en sens inverse l'un par rapport à l'autre dans la direction axiale.

7. Roulement à billes (1) selon l'une quelconque des revendications précédentes, **caractérisé en ce qu'**une ouverture de lubrifiant (22) s'étendant dans la direction axiale est disposée dans la bague latérale (6) pour chaque cavité d'encliquetage (8), laquelle ouverture est orientée dans la direction radiale par rapport au centre de la bille adjacente (4).

8. Roulement à billes (1) selon l'une quelconque des revendications précédentes, **caractérisé en ce que** la cage (5) est réalisée sous forme de cage à doigts.

9. Roulement à billes (1) selon la revendication 8, **caractérisé en ce que** chacune des portions de nervures (7) forme conjointement avec la portion de bloc extérieure façonnée (10) et la portion de bloc intérieur façonnée (11) à chaque fois un bloc massif qui s'étend dans la direction radiale sur une largeur d'au moins 25 %, de préférence d'au moins 50 %, en particulier d'au moins 75 % du diamètre de la bille (4).
